# EUROPÄISCHE PATENTSCHRIFT

(11) **EP 2 446 335 B1**
(45) Veröffentlichungstag und Bekanntmachung des Hinweises auf die Patenterteilung: **22.10.2014**
(21) Anmeldenummer: 10734440.0
(22) Anmeldetag: 18.06.2010
(51) Int. Cl.: G05D 7/01

(54) **VENTIL**
VALVE
SOUPAPE

(30) Priorität: 24.06.2009 DE 102009030182
(43) Veröffentlichungstag der Anmeldung: 02.05.2012
(73) Patentinhaber: Neoperl GmbH, 79379 Müllheim (DE)
(72) Erfinder: FANGMEIER, Martin, 79424 Auggen (DE)
(74) Vertreter: Kunst, Manuel Nikolaus Johannes
(86) Internationale Anmeldenummer: PCT/EP2010/003678
(87) Internationale Veröffentlichungsnummer: WO 2010/149313

(56) Entgegenhaltungen:
- EP-A2- 1 780 452
- CH-A- 46 886
- DE-B3-102006 057 787
- US-A- 4 467 964

## Beschreibung

Die vorliegende Erfindung betrifft ein Ventil mit einem Ventilgehäuse, in dessen Gehäuse-Innenraum ein Fluidleitungsstück vorgesehen ist, dessen abströmseitiger Umfangsrandbereich einen Ventilsitz für einen Ventilkörper bildet, welcher Ventilkörper durch den auf den Ventilkörper einwirkenden Druck des durch das Fluidleitungsstück zuströmenden Fluids einerseits und einen Gegendruck andererseits zwischen einer Offenstellung und einer Schließstellung bewegbar ist, in welcher Schließstellung der Ventilkörper den abströmseitigen Umfangsrandbereich des Fluidleitungsstücks beaufschlagt.

Beim Betreiben von druckempfindlichen und insbesondere drucklosen Warm-Wassererzeugern sind regelmäßig besondere Auslaufarmaturen notwendig, die dem durch die Versorgungsleitung nachströmenden Wasser keinen übergroßen Widerstand bieten können und dadurch einen unerwünschten Druckanstieg vermeiden. So können beispielsweise in Verbindung mit druckempfindlichen Wassererzeugern regelmäßig nur unbelüftete Strahlregler und somit solche Warm-Wasserausläufe verwendet werden, die keinen Gegendruck erzeugen.

Zunehmend erfreuen sich solche sanitären Duschbrausen der Wertschätzung, die einen Duschkopf mit einer großformatigen Duschfläche aufweisen, welche eine Vielzahl vergleichsweise kleiner Brauseöffnungen trägt. Mit Hilfe solcher Duschbrausen lässt sich eine Brauseschauer erzeugen, die aus einer Vielzahl feiner fadenförmiger Einzelstrahlen gebildet ist. Nachteilig ist jedoch, dass die in ihrem lichten Querschnitt vergleichsweise kleinen Brauseöffnungen durch Kalk- und Schmutzablagerungen leicht verschließen können. Mit zunehmendem Verschließen der Brauseöffnungen steigt die Gefahr, dass das in den Duschkopf nachströmende Wasser dort einen Druck aufbaut, der zum Verformen und letztendlich zum Bruch des Duschkopfes führen kann.

Aus der CH 46 886 A ist ein als selbsttätiger Druckregler ausgebildetes Stellventil mit einem Ventilgehäuse vorbeschrieben, in dessen Gehäuse-Innenraum ein als Innengehäuse bezeichnetes Fluidleitungsstück angeordnet ist. Während in das Fluidleitungsstück zuströmseitig ein Muffenstutzen mündet, bildet der abströmseitig Umfangsrandbereich des Fluidleitungsstücks einen Ventilsitz für einen tellerförmigen Ventilkörper. Der Ventilkörper ist über eine koaxial durch das Fluidleitungsstück hindurchgeführte Stange mit einem ersten, im Fluidleitungsstück verschieblich geführten Kolben und mit einem, das ventilgehäuse abdichtenden zweiten Kolben verbunden. Auf den zweiten Kolben wirkt eine Druckfeder ein, deren Druck durch Verstellen eines Gewindezapfens veränderbar ist. Die durch den vorbekannten Druckregler durchzuleitende, unter Druck stehende Materie gelangt durch den erwähnten Muffenstutzen in das Fluidleitungsstück und von hier durch den Ventilsitz in das Ventilgehäuse. Dadurch wird der zweite Kolben gegen die Druckfeder gedrückt, wobei sich das Ventil mehr oder weniger der Verschlussstellung nähert, bis sich der Federdruck und der Druck der Materie das Gleichgewicht halten. Solange diese Gleichgewichtslage beibehalten wird, bleibt auch die Stellung des Ventils unverändert, so dass die Zuströmung der Materie in das Ventilgehäuse eine Gleichmäßige sein wird. Ist der Druck der eindringenden Materie größer als der Federdruck, so nähert sich der Ventilkörper eventuell bis zum vollständigen Abschluss dem Ventilsitz am Fluidleitungsstück, während im umgekehrten Fall der zweite Kolben durch die Druckfeder gegen das als Innengehäuse bezeichnete Fluidleitungsstück geschoben und dadurch der Ventilkörper von der Verschlussstellung am Ventilsitz weggerückt wird. Durch Verstellen des Gewindezapfens kann die Druckfeder mehr oder weniger komprimiert und dadurch der Druck der aus dem Ventilgehäuse austretenden Materie verändert werden.

Es besteht die Aufgabe, eine konstruktiv einfache, mit geringem Aufwand herstellbare und kompakt ausgebildete Vorrichtung zu schaffen, die dem in einer fluidtechnischen Anwendung, zum Beispiel in einem Sanitärbauteil, übermäßig ansteigenden Innendruck, der regelmäßig maximal den Systemdruck erreichen kann, entgegen wirkt.

Die erfindungsgemäße Lösung dieser Aufgabe besteht darin, dass der Gegendruck auf den Ventilkörper entgegen der regulären Durchflussrichtung einwirkt, dass die Führungsbahn der dem Ventilkörper zugeordneten Schiebeführung zwischen dem Gehäuse-Innenumfang des Ventilgehäuses und dem Außenumfang des Fluidleitungsstücks umgrenzt ist, dass der Ventilkörper zumindest ein ringförmiges und in der Schiebeführung verschieblich geführtes Gleitstück sowie ein den Ventilsitz in Schließstellung beaufschlagendes Verschlussstück hat, und dass das Verschlussstück und das Gleitstück über Verbindungsstege miteinander verbunden sind, die zwischen sich Durchflussöffnungen begrenzen.

Das erfindungsgemäße Ventil weist ein Ventilgehäuse auf, in dessen Gehäuse-Innenraum ein Fluidleitungsstück vorgesehen ist. Der abströmseitige Umfangsrandbereich des Fluidleitungsstücks bildet einen Ventilsitz für einen Ventilkörper. Der Ventilkörper ist durch den auf den Ventilkörper einwirkenden Druck des durch das Fluidleitungsstück zuströmenden Fluids einerseits und einen auf den Ventilkörper entgegen der regulären Durchflussrichtung einwirkenden Gegendruck andererseits zwischen einer Offenstellung und einer Schließstellung bewegbar. Der Ventilkörper verändert seine Relativposition zum Ventilsitz in Abhängigkeit von den in entgegengesetzte Richtungen auf den Ventilkörper einwirkenden Drücken bzw. Gegendrücken derart, dass die zwischen Ventilkörper und Ventilsitz verbleibende Ventilöffnung entsprechend einem sich aufbauenden Gegendruck veränderbar ist. In Schließstellung des Ventils beaufschlagt der Ventilkörper den abströmseitigen Umfangsrandbereich des Fluidleitungsstücks und dichtet dort ab, so dass der abströmseitige Druck nicht weiter ansteigen kann. Da das erfindungsgemäße Ventil seine Ventilöffnung in Abhängigkeit von den auf den Ventilkörper in entgegengesetzte Richtungen einwirkenden Drücken und Gegendrücken verändert, reagiert das erfindungsgemäße Ventil rasch auf einen sich aufbauenden abströmseitigen Druck. Da das erfindungsgemäße Ventil sich bei stark ansteigendem abströmseitigen Druck in seine Schließstellung bewegt, wird druckbedingten Funktionsstörungen und Beschädigungen wirkungsvoll entgegengewirkt.

Der Ventilkörper des erfindungsgemäßen Ventils ist in einer geschlossenen Linearführung bewegbar. Dazu ist erfindungsgemäß vorgesehen, dass die Führungsbahn der dem Ventilkörper zugeordneten Schiebeführung zwischen dem Gehäuse-Innenumfang des Ventilgehäuses und dem Außenumfang des Fluidleitungsstücks umgrenzt ist. Um das erfindungsgemäße Ventil sehr kompakt und platzsparend ausgestalten zu können, ist vorgesehen, dass der Ventilkörper zumindest ein ringförmiges und in der Schiebeführung verschieblich geführtes Gleitstück sowie ein den Ventilsitz in Schließstellung beaufschlagendes Verschlussstück hat. Dabei kann das Verschlussstück den in Strömungsrichtung hinteren Teilbereich des Ventilkörpers bilden, während das Gleitstück in dem zwischen dem Außenumfang des Fluidleitungsstücks und dem Gehäuse-Innenumfang vorgesehenen Ringraum verschieblich geführt ist.

Um das im Ringraum zwischen dem Gehäuse-Innenumfang und dem Außenumfang des Fluidleitungsstücks verschieblich geführte Gleitstück mit dem im Bereich des Ventilsitzes befindlichen Verschlussstück verbinden zu können, ist erfindungsgemäß vorgesehen, dass das Verschlussstück und das Gleitstück über Verbindungsstege miteinander verbunden sind, die zwischen sich die Durchflussöffnungen begrenzen.

Eine gleichmäßige druckabhängige Funktionsweise des erfindungsgemäßen Ventils wird begünstigt, wenn der Ventilkörper und insbesondere dessen Verschlussstück eine Kugelform und/oder zumindest in dem den Ventilsitz beaufschlagenden Teilbereich eine kugelige oder gerundete Form hat.

Um den Schiebeweg des im Inneren des Ventilgehäuses befindlichen Ventilkörpers zu begrenzen, ist es vorteilhaft, wenn der Schiebeweg des Ventilkörpers durch zumindest einen Anschlag im Ventilgehäuse begrenzt ist, der mit einem Gegenanschlag am Ventilkörper zusammenwirkt und wenn der Anschlag vorzugsweise als ein am Gehäuse-Innenumfang vorgesehener Ringabsatz ausgebildet ist und/oder die Gegenanschläge insbesondere an den Verbindungsstegen angeordnet sind. Der Anschlag und der Gegenanschlag legen die Position des Ventilkörpers in der Offenstellung des Ventils fest.

Das erfindungsgemäße Ventil vermag besonders empfindlich und leicht auch auf geringe Druckänderungen beziehungsweise Gegendrücke zu reagieren, wenn zwischen dem Gehäuse-Innenumfang und dem Ventilkörper und/oder zwischen dem Ventilkörper und dem Außenumfang des Fluidleitungsstücks zumindest eine Ringdichtung oder Gleitringdichtung vorgesehen ist.

Eine störungsfreie Funktion des erfindungsgemäßen Ventils wird begünstigt, wenn am Gleitstück und/oder am Außenumfang des Fluidleitungsstücks zwei voneinander beabstandete Ringdichtungen oder Gleitringdichtungen vorgesehen sind, zwischen denen wenigstens eine als Fettkammer ausgebildete Ringnut vorgesehen ist.

Die zumindest eine Ringdichtung oder Gleitringdichtung kann in einer besonders einfachen Ausführungsform als Dichtring ausgestaltet sein. Eine bevorzugte Ausführungsform gemäß der Erfindung sieht jedoch vor, dass zumindest eine Ringdichtung oder Gleitringdichtung als Lippendichtung ausgestaltet ist. Ist zumindest eine Ringdichtung oder Gleitringdichtung als Lippendichtung ausgestaltet, die zwischen dem Gehäuse-Innenumfang und dem Ventilkörper und/oder zwischen dem Ventilkörper und dem Außenumfang des Fluidleitungsstücks abdichtet, werden Festklebeeffekte, die bei Dichtringen über die Zeit eventuell auftreten können, vermieden. Die geringere Anhaftung einer solchen Lippendichtung bietet den Vorteil, dass sich der Ventilkörper leichtläufiger im Ventilgehäuse bewegen lässt.

Dabei wird eine Ausführungsform bevorzugt, bei der die zumindest eine Lippendichtung in einer am Ventilkörper-Umfang vorgesehenen Ringnut gehalten ist und mit dem freien Umfangsrandbereich wenigstens einer Dichtlippe am Gehäuse-Innenumfang dichtend anliegt.

Möglich ist es, dass der im Ventilgehäuse befindliche Ventilkörper nur durch den Druck des in Durchflussrichtung zuströmenden Fluids einerseits und einem sich in Gegenrichtung aufbauenden Gegendruck andererseits bewegt wird. Eine bevorzugte Ausführungsform gemäß der Erfindung sieht jedoch vor, dass der Ventilkörper gegen eine Rückstellkraft von seiner Ausgangslage in seine Offenstellung und/oder in die Schließstellung bewegbar ist. Bei einer solchen bevorzugten Ausführungsform wird der Ventilkörper in einer bevorzugten Ausgangsstellung gehalten, um sich bei einer Änderung der Druckverhältnisse im Ventilgehäuse gegen die Rückstellkraft zu bewegen. Die Rückstellkraft kann den Ventilkörper - je nach dem, von welcher Seite aus diese Rückstellkraft den Ventilkörper beaufschlagt - in einer bevorzugten Schließstellung oder einer bevorzugten Offenstellung gehalten werden. Wirken beidseits des Ventilkörpers Rückstellkräfte auf ihn ein und wird der Ventilkörper durch die Rückstellkräfte in einer bevorzugten Zwischenstellung gehalten, kann der Ventilkörper sich in Abhängigkeit der jeweils Druckdifferenz entweder in Richtung zur vorherrschenden Schließstellung oder in Richtung zur Offenstellung bewegen, wodurch eine Gymnastizierung der zumindest einen Ringdichtung oder Gleitringdichtung erreicht wird und wodurch einer Anhaftung dieser Dichtung entgegengewirkt wird.

Dabei sieht eine einfache und mit geringem Aufwand herstellbare Ausführungsform gemäß der Erfindung vor, dass zumindest ein gummielastisches oder federelastisches Element als Rückstellkraft dient.

Die vielseitige Verwendbarkeit des erfindungsgemäßen Ventils wird begünstigt, wenn das Ventilgehäuse als Patronen- oder als Kartuschengehäuse ausgebildet ist.

Damit sich in dem den Schiebeweg umgrenzenden Ringraum kein abgeschlossenes Luftpolster bildet, das eventuell dem das Ventil steuernden Gegendruck unkontrolliert entgegenwirken könnte, ist es vorteilhaft, wenn das Ventilgehäuse in dem zuströmseitigen Teilbereich der Schiebeführung zur Atmosphäre hin offen ausgebildet ist.

Bei einer bevorzugten Ausführungsform der Erfindung ist das Ventil als Druckbegrenzer ausgestaltet. Ein solches, als Druckbegrenzer ausgestaltetes Ventil kann beispielsweise in einem drucklosen Wassererwärmer, einer Kaffeemaschine, einem Getränkeautomat oder auch in einem Duschkopf vorteilhaft eingesetzt werden.

Eine Weiterbildung gemäß der Erfindung sieht vor, dass dem Ventil in Strömungsrichtung ein belüfteter Strahlregler nachgeschaltet ist, der vorzugsweise im Wasserauslauf einer sanitären Auslaufarmatur angeordnet ist. Diese Auslaufarmatur kann gegebenenfalls auch der Brausekopf einer Hand- oder Küchenbrause sein, die zwischen einer Brausefunktion und einem belüfteten Wasser- oder Einzelstrahl umschaltbar ist. Da das als Druckbegrenzer dienende Ventil einem Druckanstieg entgegenwirkt, der einen festgelegten Innendruck übersteigt, ist mit Hilfe des erfindungsgemäßen Ventils auch der Einbau eines belüfteten Strahlreglers möglich, obwohl dieser belüftete Strahlregler funktionsbedingt einen Gegendruck erzeugt.

Weiterbildungen gemäß der Erfindung ergeben sich aus den Ansprüchen in Verbindung mit der Zeichnung. Nachstehend wird die Erfindung anhand vorteilhafter Ausführungsbeispiele noch näher beschrieben.

Es zeigt:
- Fig. 1: ein als Druckbegrenzer ausgestaltetes und in seiner Offenstellung dargestelltes Ventil, dessen Ventilgehäuse als Einsetz-Kartusche ausgestaltet ist, welche in eine sanitäre Versorgungsleitung und insbesondere in eine Wasserleitung einsetzbar ist, wobei das Ventil in einem Längsschnitt durch Schnittebene I-I in Fig. 2 gezeigt ist,
- Fig. 2: das Ventil aus Fig. 1 in einer Draufsicht auf seine Abströmseite,
- Fig. 3: das Ventil aus Fig. 1 und 2 in seiner längsgeschnittenen Schließstellung in Schnittebene III-III aus Fig. 4,
- Fig. 4: das in seiner Schließstellung dargestellte Ventil aus Fig. 1 bis 3 in einer Draufsicht auf seine Abströmseite,
- Fig. 5: ein mit Fig. 1 bis 4 vergleichbares und in einem Längsschnitt durch Schnittebene V-V in Fig. 6 dargestelltes Ventil, dessen Ventilkörper gegen ein Luftpolster von seiner hier gezeigten Offenstellung in eine Schließstellung bewegbar ist,
- Fig. 6: das ebenfalls in seiner Schließstellung dargestellte Ventil aus Fig. 5 in einer Draufsicht auf seine Abströmseite,
- Fig. 7: das Ventil aus Fig. 5 und 6 in seiner längsgeschnittenen Schließstellung in Schnittebene VII-VII in Fig. 8,
- Fig. 8: das in seiner Schließstellung dargestellte Ventil aus Fig. 5 bis 7 in einer Draufsicht auf seine Abströmseite,
- Fig. 9: das in einem längsgeschnittenen Anwendungsbeispiel dargestellte Ventil aus Fig. 5 bis 8 in seiner Offenstellung in Schnittebene IX-IX aus Fig. 10,
- Fig. 10: das in dem Anwendungsbeispiel gemäß Fig. 9 gezeigte Ventil in einer Draufsicht auf seine Abströmseite, wobei das Ventil auch hier in seiner Offenstellung dargestellt ist,
- Fig. 11: das in dem längsgeschnittenen Anwendungsbeispiel aus Fig. 9 und 10 gezeigte Ventil in seiner Schließstellung, wobei das Ventil in Schnittebene X-X aus Fig. 12 gezeigt ist,
- Fig. 12: das in einem Anwendungsbeispiel gezeigte und in seiner Schließstellung dargestellte Ventil aus Fig. 9 bis 11 in einer Draufsicht auf seine Abströmseite,
- Fig. 13: eine aus Duschbrause und Kugelgelenk bestehende und in einem Längsschnitt dargestellte Baugruppe, in die ein als Druckminderer dienendes Ventil gemäß den Fig. 1 bis 12 integriert ist,
- Fig. 14: die Baugruppe aus Fig. 13 in einer perspektivischen Seitenansicht,
- Fig. 15: die in einem Längsschnitt dargestellte Baugruppe aus Fig. 13 und 14 in der Schließstellung ihres als Druckbegrenzer ausgebildeten Ventils, wobei die Duschbrause hier mittels dem Kugelgelenk in einer Schwenkposition gehalten ist,
- Fig. 16: die in einer perspektivischen Ansicht dargestellte Baugruppe aus Fig. 13 bis 15 in der Schwenkposition gemäß Fig. 15,
- Fig. 17: ein in seiner längsgeschnittenen Offenstellung, in Schnittebene XVII - XVII aus Fig. 18 dargestelltes und als Druckbegrenzer ausgestaltetes Ventil, bei dem die am Ventilkörper vorgesehene Gleitringdichtung als Lippendichtung ausgestaltet ist, wobei der Ventilkörper beidseits von Rückstellfedern oder dergleichen Rückstellkräften beaufschlagt wird, die den Ventilkörper in einer bevorzugten Zwischenstellung halten, und
- Fig. 18: das Ventil aus Fig. 17 in einer Draufsicht auf seine Abströmseite.

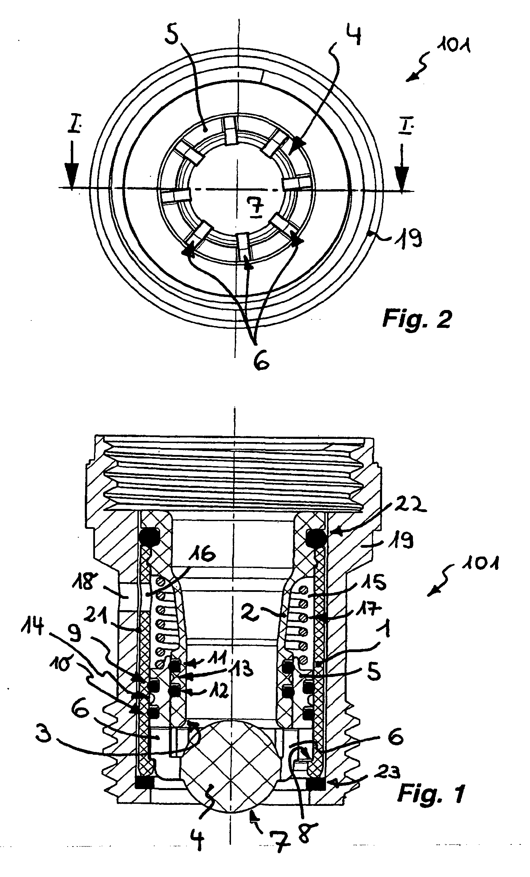

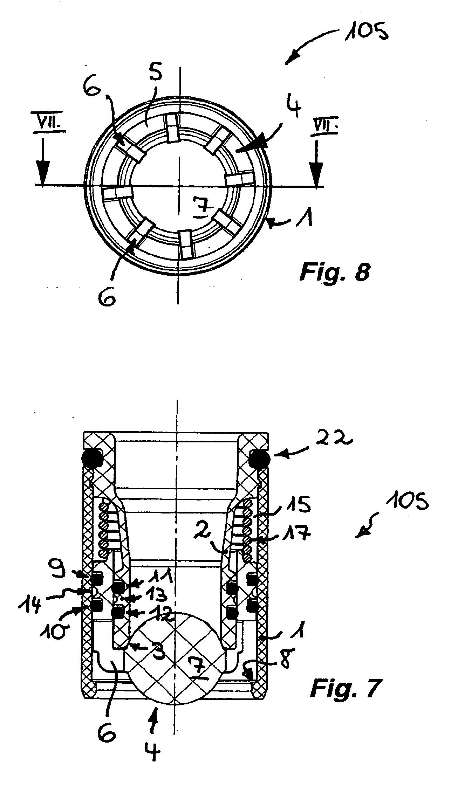

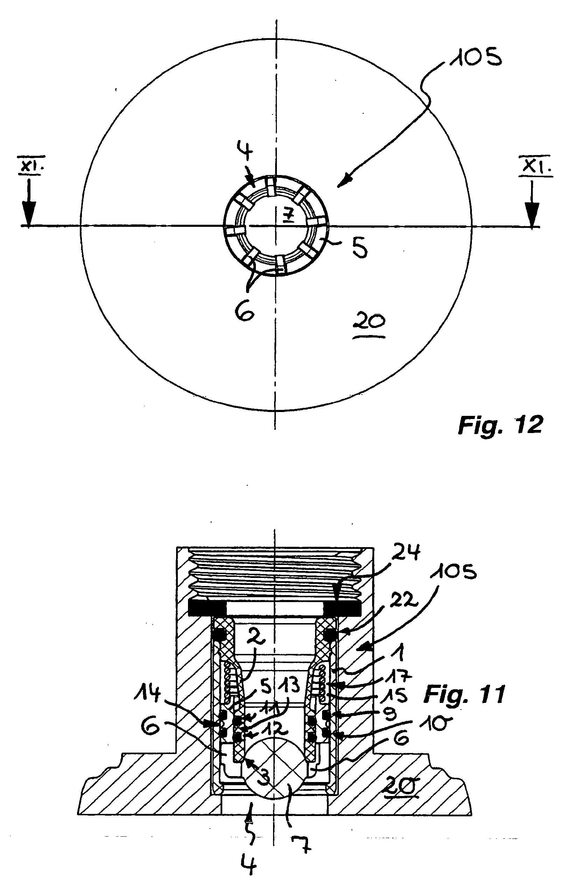

In den Fig. 1 bis 18 sind verschiedene Ausführungen 101, 105 und 113 und 117 eines Ventils dargestellt, dass als Druckbegrenzer verwendbar und in den hier gezeigten Ausführungsbeispielen in eine sanitäre Wasserleitung einsetzbar ist. Jedes der hier gezeigten Ventilausführungen 101, 105, 113 und 117 weist ein Ventilgehäuse 1 auf, in dessen Gehäuse-Innenraum ein Fluidleitungsstück 2 vorgesehen ist, dessen abströmseitiger Umfangsrandbereich einen Ventilsitz 3 für einen Ventilkörper 4 bildet. Der Ventilkörper 4 ist durch den auf den Ventilkörper 4 einwirkenden Druck des durch das Fluidleitungsstück 2 zuströmenden Fluids einerseits und einen auf den Ventilkörper 4 entgegen der regulären Durchflussrichtung einwirkenden Gegendruck andererseits zwischen einer Offenstellung und einer Schließstellung bewegbar.

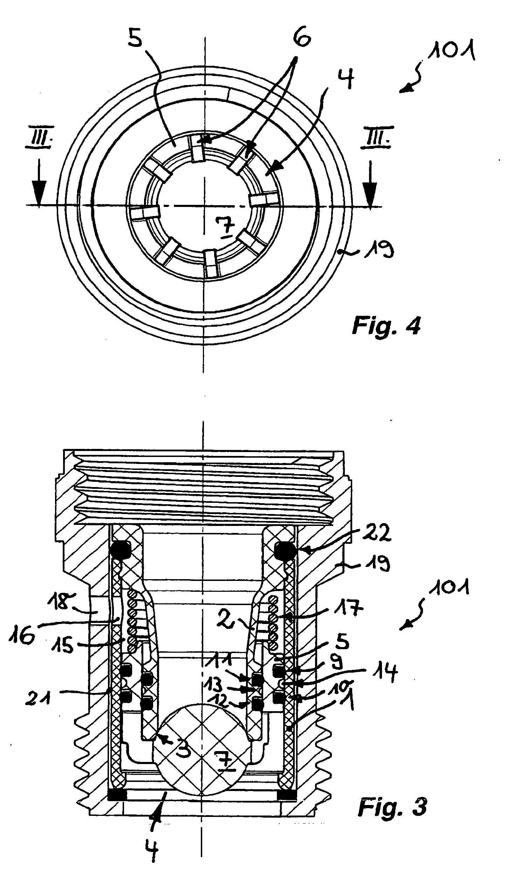

Während die Ventilausführungen 101, 105 und 113 und 117 in den Fig. 1, 2, 5, 6, 9, 10, 13 17 und 18 in der Offenstellung des Ventils gezeigt sind, werden diese Ventilausführungen 101, 105 und 113 in den Fig. 3, 4, 7, 8, 11, 12 und 15 in der Schließstellung gezeigt. In der in den Fig. 3, 4, 7, 8, 11, 12 und 15 gezeigten Schließstellung beaufschlagt der Ventilkörper 4 den abströmseitigen Umfangsrandbereich des Fluidleitungsstücks 2.

Aus den Längsschnitten in den Fig. 1, 3, 5, 7, 9, 11, 13, 15 und 17 ist erkennbar, dass der Gehäuse-Innenumfang des Ventilgehäuses 1 als Schiebeführung für den Ventilkörper 4 ausgestaltet ist. Dabei ist die Führungsbahn der dem Ventilkörper 4 zugeordneten Schiebeführung zwischen dem Gehäuse-Innenumfang des Ventilgehäuses und dem Außenumfang des Fluidleitungsstücks 2 umgrenzt.

Der Ventilkörper 4 der hier gezeigten Ventilausführungen 101, 105, 113 und 117 weist ein Gleitstück 5 auf, das in der Schiebeführung verschieblich geführt ist und - wie hier - ringförmig ausgestaltet sein kann. Das Gleitstück 5 ist über mehrere, in Umfangsrichtung vorzugsweise gleichmäßig voneinander beabstandete Verbindungsstege 6 mit einem Verschlussstück 7 verbunden, wobei die Verbindungsstege 6 zwischen sich Durchflussöffnungen begrenzen. Das Verschlussstück 7 ist hier kugelförmig ausgestaltet und weist in seinem dem Ventilsitz 3 zugewandten Teilbereich somit eine gerundete Außenkontur auf, welche eine Zentrierung des Ventilkörpers 4 während der Schließbewegung des Ventils begünstigt.

Der Schiebeweg des Ventilkörpers 4 ist in der Schließstellung durch den am Umfang des Ventilkörpers 4 anliegenden Ventilsitz 3 begrenzt. In der anderen Bewegungsrichtung des Ventilkörpers 4 ist der Schiebeweg durch zumindest einen Anschlag im Ventilgehäuse 1 begrenzt, welcher Anschlag mit einem Gegenanschlag am Ventilkörper 4 zusammenwirkt. Dabei ist der Anschlag hier als ein am Gehäuse-Innenumfang vorgesehener Ringabsatz 8 augestaltet.

In den Längsschnitten gemäß den Fig. 1, 3, 5, 7, 9, 11, 13 und 15 ist erkennbar, dass zwischen dem Gehäuse-Innenumfang und dem Ventilkörper 4 sowie zwischen dem Ventilkörper 4 und dem Außenumfang des Fluidleitungsstücks zumindest eine Ringdichtung oder Gleitringdichtung vorgesehen ist. Dazu sind am Gleitstück 5 einerseits und am Außenumfang des Fluidleitungsstücks 2 andererseits jeweils zwei Ringdichtungen 9, 10 bzw. 11, 12 vorgesehen, die in entsprechenden Ringnuten gehalten sind. Zwischen den voneinander beabstandeten und die Ringdichtungen 9, 10 bzw. 11, 12 aufnehmenden Ringnuten ist jeweils eine weitere Ringnut 13 bzw. 14 vorgesehen, die als Fettkammer ausgebildet ist und eine reibungsarme Schiebebewegung des Ventilkörpers 4 in seiner Schiebeführung auch über einen längeren Zeitraum sicherstellen soll.

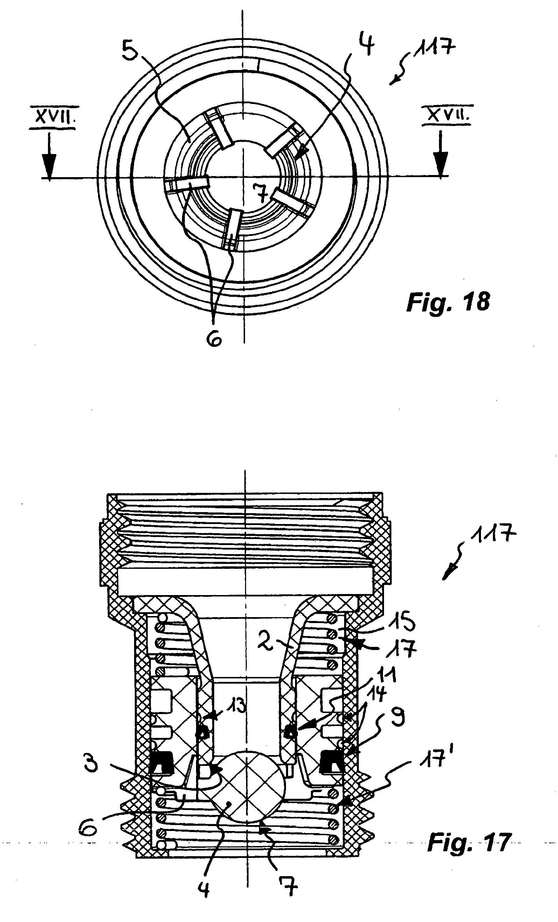

Während die in den Ventilen 101, 105 und 113 vorgesehen Ringdichtungen 9, 10 bzw. 11, 12 als Dichtringe ausgebildet sind, weist das in den Fig. 17 und 18 gezeigte Ventil am Gleitstück 5 einerseits und am Außenumfang des Fluidleitungsstücks 2 andererseits jeweils nur eine Ringdichtung 9 beziehungsweise 11 auf, die hier als Lippendichtung ausgestaltet sind. Mittels dieser Lippendichtungen 9,11 werden Festklebeeffekte vermieden, die bei Dichtringen über die Zeit eventuell auftreten können. Die geringere Anhaftung der Lippendichtungen 9, 11 bietet den Vorteil, dass sich der Ventilkörper 4 leichtläufiger im Ventilgehäuse 1 bewegen lässt. Auch die im Ventil 117 vorgesehenen Ringdichtungen 9, 11 sind in entsprechenden Ringnuten gehalten. Dabei sind auf der Zuströmseite dieser Ringnuten jeweils eine weitere Ringnut 13 beziehungsweise 14 vorgesehen, die als Fettkammer ausgebildet ist und ebenfalls eine reibungsarme Schiebebewegung des Ventilkörpers 4 sicherstellen soll.

Der Ventilkörper 4 kann durch die in entgegengesetzte Richtungen wirksamen Druckkräfte bewegt und zwischen seiner Offenstellung und seiner Schließstellung derart positioniert werden, dass die zwischen Ventilkörper 4 und Ventilsitz 3 verbleibende Ventilöffnung entsprechend einem sich auf der Abströmseite des Ventils aufbauenden Gegendruck veränderbar ist. In Schließstellung des Ventils beaufschlagt der Ventilkörper 4 den abströmseitigen und als Ventilsitz 3 ausgebildeten Umfangsrandbereich des Fluidleitungsstücks 2 und dichtet dort ab, so dass der abströmseitige Druck nicht weiter ansteigen kann.

Da die hier dargestellten Ventile ihre Ventilöffnung in Abhängigkeit von den auf den Ventilkörper 4 in entgegengesetzte Richtungen einwirkenden Drücken und Gegendrücken verändern, reagieren diese Ventile rasch auf einen sich aufbauenden abströmseitigen Druck.

Der Ventilkörper 4 kann zusätzlich auch gegen eine Rückstellkraft von seiner Offenstellung in seine Schließstellung bewegbar sein. Als Rückstellkraft kann dabei auch ein kompressibles Luftpolster dienen, dass sich in dem Ringraum 15 befindet, der zwischen dem Gehäuse-Innenumfang und dem Außenumfang des Fluidleitungsstücks 2 umgrenzt ist und der sich auf der dem Verschlussstück 7 abgewandten Seite des Gleitstücks 5 befindet.

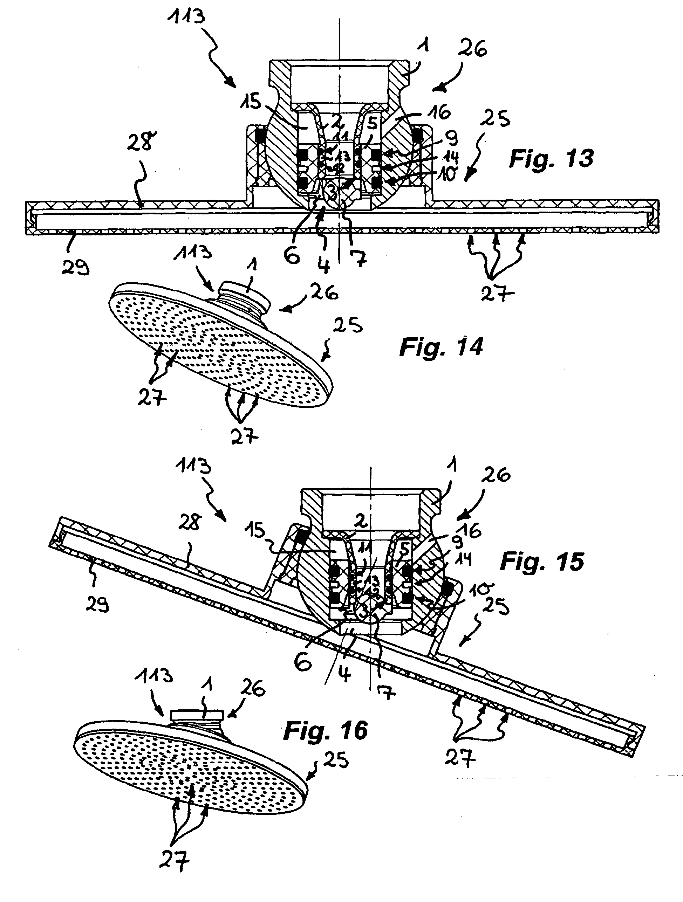

Bei der in den Fig. 13 und 15 gezeigten Ventilausführung 113 wird der Ventilkörper 4 lediglich durch die in entgegengesetzte Richtungen wirksamen Druckkräfte bewegt und der Ringraum 15 ist durch einen Entlüftungskanal 16 mit der Umgebung verbunden. Bei den in den Fig. 1, 3, 5, 7, 9 und 11 gezeigten Ventilausführungen 101 und 105 ist der Ventilkörper 4 demgegenüber gegen die Rückstellkraft einer Rückstellfeder 17 in seine Schließstellung bewegbar. Demgegenüber ist bei dem in den Fig. 17 und 18 gezeigten Ventil 117 vorgesehen, dass der Ventilkörper von der in Fig. 17 gezeigten, bevorzugten Ausgangslage in seine Offenstellung oder in seine Schließstellung bewegt werden kann. Da auf den Ventilkörper 4 des Ventils 117 beidseits die hier von Rückstellfedern 17, 17' ausgeübten Rückstellkräfte einwirken, wird der Ventilkörper 4 in Fig. 17 in einer bevorzugten Zwischenstellung gehalten. Dabei kann sich der Ventilkörper 4 des Ventils 117 in Abhängigkeit der jeweils vorherrschenden Druckdifferenz gegen die Rückstellkraft einer der Rückstellfedern 17, 17' entweder in Richtung zur Schließstellung oder in Richtung zur Offenstellung bewegen, wodurch eine Gymnastizierung der Ringdichtungen 9, 11 erreicht wird.

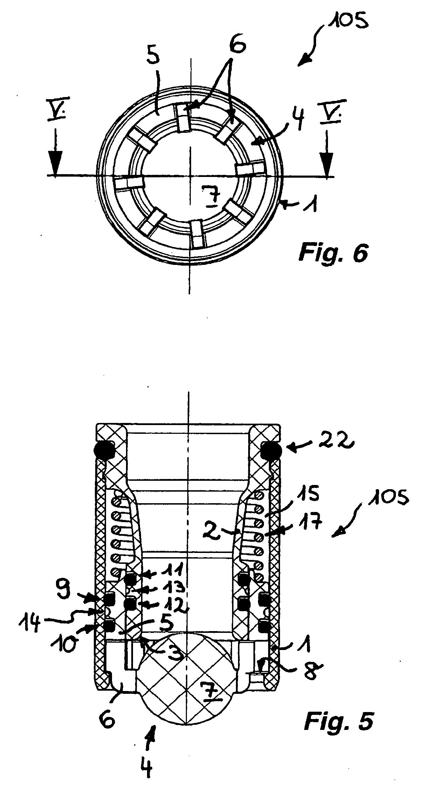

Während bei der in den Fig. 1 und 3 gezeigten Ventilausführung 101 der die Rückstellfeder 17 aufnehmende Ringraum 15 über den Entlüftungskanal 16 und eine mit dem Entlüftungskanal 16 verbundene Entlüftungsöffnung 18 in der die Ventilausführung 101 aufnehmenden Kartuschen-Aufnahme mit der Umgebung verbunden ist, dient bei der in den Fig. 5, 7, 9 und 11 gezeigten Ventilausführung 105 das im Ringraum 15 eingeschlossene Luftpolster zusätzlich als Rückstellkraft.

Zusätzlich oder statt dessen ist beispielsweise auch ein im Ringraum 15 angeordnetes und als Rückstellkraft dienendes Ringstück denkbar, das insbesondere aus geschlossen-porigem Schaumstoff hergestellt sein kann.

Bei den hier dargestellten Ventilausführungen 101, 105 und 113 ist sichergestellt, dass auf der nicht dem Gegendruck ausgesetzten Rückseite des Gleitstücks 5 stets Atmosphärendruck oder ein im Vergleich zu der dem Gegendruck ausgesetzten Seite des Gleitstücks 5 niedriger Druck anliegt.

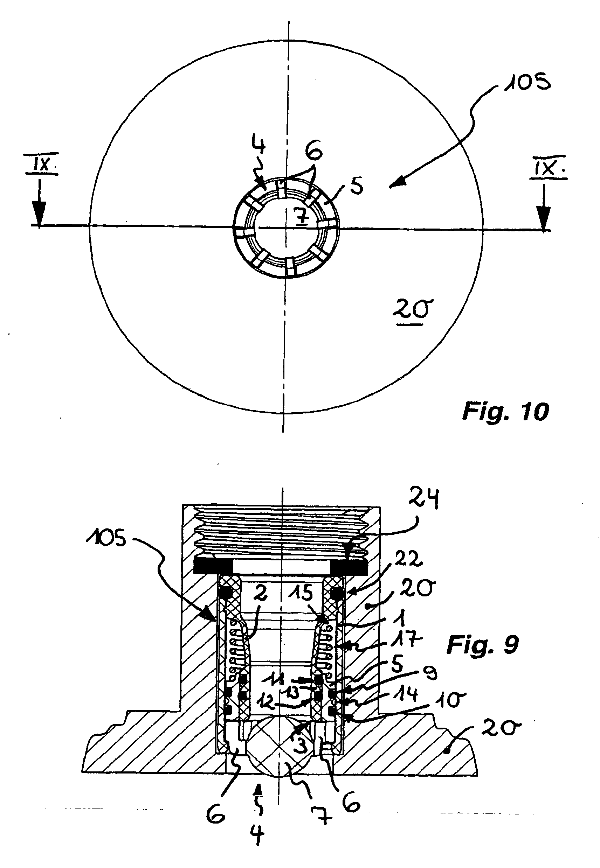

Bei den in den Fig. 1 bis 12 gezeigten Ventilausführungen 101 und 105 ist das Ventilgehäuse 1 als Einsetzpatrone oder Einsetzkartusche ausgestaltet, die in eine Kartuschenaufnahme lösbar einsetzbar ist. Diese Kartuschenaufnahme kann beispielsweise als ein in den Fig. 1 bis 4 gezeigtes Rohrstück oder - entsprechend den kundenspezifischen Anforderungen - auch als ein in den Fig. 9 bis 12 gezeigter Rohrstutzen 20 ausgebildet sein.

Wie die Fig. 1 bis 4 zeigen, ist der zwischen dem Ventilgehäuse 1 und dem Innenumfang des Rohrstücks 19 verbleibende Ringraum 21 beidseits durch Ringdichtungen 22, 23 abgedichtet und über die Entlüftungsöffnung 18 mit der Umgebung verbunden.

Bei dem in den Fig. 9 bis 12 gezeigten Anwendungsbeispiel ist das Ventilgehäuse 4 bis zu einem hier als Ringabsatz ausgestalteten Einsteckanschlag in ein Loch der als Rohrstutzen 20 ausgebildeten Kartuschenaufnahme eingesetzt und mittels einem zuströmseitigen Dichtring 24 in der Einsetzposition gesichert.

Bei der in den Fig. 13 bis 15 gezeigten Ventilausführung 113 ist das Ventil Bestandteil einer Baugruppe, die eine Duschbrause 25 und ein anschlussseitiges Kugelgelenk 26 umfasst. Dabei ist das Ventilgehäuse 1 der in den Fig. 13 bis 15 gezeigten Ventilausführung 113 als Gelenkkugel des Kugelgelenks 26 ausgestaltet.

Die Duschbrause 25, die eine aus einer Vielzahl fadenförmiger Einzelstrahlen gebildete Brauseschauer erzeugen soll, weist eine entsprechende Vielzahl von Brauseöffnungen 27 auf, welche einen vergleichsweise kleinen lichten Öffnungsquerschnitt haben. Da diese vergleichsweise kleinen Brauseöffnungen 27 leicht durch Kalk- oder Schmutzablagerungen verstopfen können, besteht die Gefahr, dass sich in der Duschbrause 25 ein unerwünschter Druck aufbaut. Insbesondere bei der hier aus zwei miteinander verrasteten Duschbrause-Teilen 28, 29 gebildeten Duschbrause 25 besteht die Gefahr, dass ein solcher unerwünschter Druck eine Verformung oder gar einen Bruch der dünnwandigen Duschbrause 25 bewirken kann. Ein solcher unerwünschter Druck, wird hier nun durch die Ventilausführung 113 verhindert. Da auch die Ventilausführung 113 ihre Ventilöffnung in Abhängigkeit von den auf den Ventilkörper 4 in entgegengesetzte Richtungen einwirkenden Drücken und Gegendrücken verändert, reagiert die Ventilausführung 113 rasch auf einen sich aufbauenden abströmseitigen Druck. Da die Ventilausführung 113 sich bei stark ansteigendem abströmseitigen Druck in ihre Schließstellung bewegt, wird druckbedingten Funktionsstörungen und Beschädigungen der Duschbrause 25 wirkungsvoll entgegengewirkt.

Es versteht sich, dass das hier als Druckbegrenzer dienende Ventil auch in anderen Anwendungsfällen vorteilhaft einsetzbar ist. So kann das hier dargestellte Ventil, das auch in eine Gas- oder eine andere Fluidleitung eingesetzt werden kann, beispielsweise auch in drucklosen Wassererwärmern, in Kaffeemaschinen oder in Getränkeautomaten eingesetzt werden, um auch dort einem unerwünschten Gegendruck entgegenzuwirken.

## Patentansprüche

1. Ventil mit einem Ventilgehäuse (1), in dessen Gehäuse-Innenraum ein Fluidleitungsstück (2) vorgesehen ist, dessen abströmseitiger Umfangsrandbereich einen Ventilsitz (3) für einen Ventilkörper (4) bildet, welcher Ventilkörper (4) durch den auf den Ventilkörper (4) einwirkenden Druck des durch das Fluidleitungsstück (2) zuströmenden Fluids einerseits und einen Gegendruck andererseits zwischen einer Offenstellung und einer Schließstellung bewegbar ist, in welcher Schließstellung der Ventilkörper (4) den abströmseitigen Umfangsrandbereich des Fluidleitungsstücks (2) beaufschlagt, **dadurch gekennzeichnet, dass** der Gegendruck auf den Ventilkörper (4) entgegen der regulären Durchflussrichtung einwirkt, dass die Führungsbahn der dem Ventilkörper (4) zugeordneten Schiebeführung zwischen dem Gehäuse-Innenumfang des Ventilgehäuses (1) und dem Außenumfang des Fluidleitungsstücks (2) umgrenzt ist, dass der Ventilkörper (4) zumindest ein ringförmiges und in der Schiebeführung verschieblich geführtes Gleitstück (5) sowie ein dem Ventilsitz (3) in Schließstellung beaufschlagendes Verschlussstück (7) hat, und dass das Verschlussstück (7) und das Gleitstück (5) über Verbindungsstege (6) miteinander verbunden sind, die zwischen sich Durchflussöffnungen begrenzen.

2. Ventil nach Anspruch 1, **dadurch gekennzeichnet, dass** der Ventilkörper (4) und insbesondere dessen Verschlussstück (7) eine Kugelform und/oder zumindest in dem den Ventilsitz (3) beaufschlagenden Teilbereich eine kugelige oder gerundete Form hat.

3. Ventil nach Anspruch 1 oder 2, **dadurch gekennzeichnet, dass** der Schiebeweg des Ventilkörpers (4) durch zumindest einen Anschlag im Ventilgehäuse (1) begrenzt ist, der mit einem Gegenanschlag am Ventilkörper (4) zusammenwirkt und dass der Anschlag vorzugsweise als ein am Gehäuse-Innenumfang vorgesehener Ringabsatz (8) ausgestaltet ist und/oder die Gegenanschläge insbesondere an den Verbindungsstegen (6) angeordnet sind.

4. Ventil nach einem der Ansprüche 1 bis 3, **dadurch gekennzeichnet, dass** zwischen dem Gehäuse-Innenumfang und dem Ventilkörper (4) und/oder zwischen dem Ventilkörper (4) und dem Außenumfang des Fluidleitungsstücks (2) zumindest eine Ringdichtung (9, 10; 11, 12) oder Gleitringdichtung vorgesehen ist.

5. Ventil nach einem der Ansprüche 1 bis 4, **dadurch gekennzeichnet, dass** am Gleitstück (5) und/oder am Außenumfang des Fluidleitungsstücks (2) zwei voneinander beabstandete Ringdichtungen (9, 10; 11, 12) oder Gleitringdichtungen vorgesehen sind, zwischen denen wenigstens eine als Fettkammer ausgebildete Ringnut (13, 14) vorgesehen ist.

6. Ventil nach Anspruch 4 oder 5, **dadurch gekennzeichnet, dass** zumindest eine Ringdichtung oder Gleitringdichtung (9; 11) als Lippendichtung ausgestaltet ist.

7. Ventil nach Anspruch 6, **dadurch gekennzeichnet, dass** die zumindest eine Lippendichtung in einer am Ventilkörper-Umfang vorgesehenen Ringnut gehalten ist und mit dem freien Umfangsrandbereich wenigstens einer Dichtlippe am Gehäuse-Innenumfang des Ventilgehäuses (1) dichtend anliegt.

8. Ventil nach einem der Ansprüche 1 bis 7, **dadurch gekennzeichnet, dass** der Ventilkörper (4) gegen eine Rückstellkraft von einer Ausgangslage in seine Offenstellung und/oder in seine Schließstellung bewegbar ist.

9. Ventil nach Anspruch 8, **dadurch gekennzeichnet, dass** zumindest ein gummielastisches oder federelastisches Element als Rückstellkraft dient.

10. Ventil nach einem der Ansprüche 1 bis 9, **dadurch gekennzeichnet, dass** das ventilgehäuse (1) als Patronen- oder als Kartuschengehäuse ausgebildet ist.

11. Ventil nach einem der Ansprüche 1 bis 10, **dadurch gekennzeichnet, dass** das Ventilgehäuse (1) in dem zuströmseitigen Teilbereich der Schiebeführung zur Umgebung hin offen ausgebildet ist.

12. Ventil nach einem der Ansprüche 1 bis 11, **dadurch gekennzeichnet, dass** das Ventil als Druckbegrenzer ausgebildet ist.

13. Ventil nach einem der Ansprüche 1 bis 12, **dadurch gekennzeichnet, dass** dem Ventil in Strömungsrichtung ein belüfteter Strahlregler nachgeschaltet ist, der vorzugsweise im Wasserauslauf einer sanitären Auslaufarmatur angeordnet ist.

## Claims

1. Valve having a valve housing (1), in the interior space of which is provided a fluid line piece (2) whose outflow-side circumferential edge region forms a valve seat (3) for a valve body (4), which valve body (4) can be moved between an open position and a closed position by firstly the pressure, which acts on the valve body (4), of the fluid flowing in through the fluid line piece (2) and secondly by a counterpressure, in which closed position the valve body (4) acts on the outflow-side circumferential edge region of the fluid line piece (2), **characterized in that** the counterpressure acts on the valve body (4) counter to the regular throughflow direction, **in that** the guide path of the sliding guide assigned to the valve body (4) is bordered between the housing inner circumference of the valve housing (1) and the outer circumference of the fluid line piece (2), **in that** the valve body (4) has at least one annular sliding piece (5), which is displaceably guided in the sliding guide, and a closure piece (7) which acts on the valve seat (3) in the closed position, and **in that** the closure piece (7) and the sliding piece (5) are connected to one another by means of connecting webs (6) which between them delimit throughflow openings.

2. Valve according to Claim 1, **characterized in that** the valve body (4) and in particular the closure piece (7) thereof has a spherical shape and/or, at least in the partial region which acts on the valve seat (3), a spheroidal or rounded shape.

3. Valve according to either of Claims 1 and 2, **characterized in that** the sliding travel of the valve body (4) is delimited by at least one stop in the valve housing (1), which stop interacts with a counterpart stop on the valve body (4), and **in that** the stop is designed preferably as an annular shoulder (8) provided on the housing inner circumference, and/or the counterpart stops are arranged in particular on the connecting webs (6).

4. Valve according to one of Claims 1 to 3, **characterized in that** at least one ring seal (9, 10; 11, 12) or slide ring seal is provided between the housing inner circumference and the valve body (4) and/or between the valve body (4) and the outer circumference of the fluid line piece (2).

5. Valve according to one of Claims 1 to 4, **characterized in that** two ring seals (9, 10; 11, 12) or slide ring seals, which are spaced apart from one another, are provided on the sliding piece (5) and/or on the outer circumference of the fluid line piece (2), between which ring seals or slide ring seals there is provided at least one annular groove (13, 14) formed as a grease chamber.

6. Valve according to Claim 4 or 5, **characterized in that** at least one ring seal or slide ring seal (9; 11) is designed as a lip seal.

7. Valve according to Claim 6, **characterized in that** the at least one lip seal is held in an annular groove provided on the valve body circumference, and bears sealingly with the free circumferential edge region of at least one sealing lip against the housing inner circumference of the valve housing (1).

8. Valve according to one of Claims 1 to 7, **characterized in that** the valve body (4) can be moved from a starting position into its open position and/or into its closed position counter to a restoring force.

9. Valve according to Claim 8, **characterized in that** at least one rubber-elastic or resiliently elastic element serves to provide a restoring force.

10. Valve according to one of Claims 1 to 9, **characterized in that** the valve housing (1) is designed as a cartridge housing.

11. Valve according to one of Claims 1 to 10, **characterized in that** the valve housing (1), in the inflow-side partial region of the sliding guide, is designed to be open to the environment.

12. Valve according to one of Claims 1 to 11, **characterized in that** the valve is designed as a pressure limiter.

13. Valve according to one of Claims 1 to 12, **characterized in that** an aerated jet regulator is positioned downstream of the valve in the flow direction, which jet regulator is preferably arranged in the water outlet of a sanitary outlet fitting.

## Revendications

1. Soupape munie d'un carter (1) dans l'espace intérieur duquel est prévue une pièce (2) de canalisation d'un fluide dont la région marginale du pourtour, située côté sortie, forme un siège d'obturation (3) dévolu à un corps obturateur (4), lequel corps obturateur (4) peut être mû entre une position d'ouverture et une position de fermeture, d'une part sous l'effet de la pression agissant sur ledit corps obturateur (4) et exercée par le fluide affluant en empruntant ladite pièce de canalisation (2) et, d'autre part, sous l'effet d'une contre-pression, position de fermeture dans laquelle ledit corps obturateur (4) sollicite ladite région marginale du pourtour de ladite pièce (2) de canalisation du fluide qui est située côté sortie, **caractérisée par le fait que** la contre-pression agit sur le corps obturateur (4) en sens inverse de la direction normale d'écoulement ; **par le fait que** le chemin de guidage du guide de coulissement affecté audit corps obturateur (4) est délimité, dans le sens circonférentiel, entre le pourtour intérieur du carter (1) de la soupape et le pourtour extérieur de la pièce (2) de canalisation du fluide ; **par le fait que** ledit corps obturateur (4) comprend au moins une pièce annulaire de glissement (5), guidée de manière coulissante dans ledit guide de coulissement, ainsi qu'une pièce obturatrice (7) sollicitant le siège d'obturation (3) en position de fermeture ; et **par le fait que** ladite pièce obturatrice (7) et ladite pièce de glissement (5) sont reliées l'une à l'autre par l'intermédiaire de membrures de liaison (6) délimitant, entre elles, des orifices d'écoulement.

2. Soupape selon la revendication 1, **caractérisée par le fait que** le corps obturateur (4), et notamment la pièce obturatrice (7) de ce dernier, présentent une forme sphérique et/ou, au moins dans la région partielle sollicitant le siège d'obturation (3), une forme sphérique ou arrondie.

3. Soupape selon la revendication 1 ou 2, **caractérisée par le fait que** le trajet de coulissement du corps obturateur (4) est délimité par au moins une butée située dans le carter (1) de ladite soupape, et coopérant avec une contre-butée située sur ledit corps obturateur (4) ; et **par le fait que** ladite butée est réalisée, de préférence, sous la forme d'un gradin annulaire (8) prévu sur le pourtour intérieur dudit carter, et/ou les contre-butées sont notamment disposées sur les membrures de liaison (6).

4. Soupape selon l'une des revendications 1 à 3, **caractérisée par le fait qu'**au moins une garniture annulaire d'étanchement (9, 10 ; 11, 12), ou garniture d'étanchement à anneau glissant, est prévue entre le pourtour intérieur du carter et le corps obturateur (4), et/ou entre ledit corps obturateur (4) et le pourtour extérieur de la pièce (2) de canalisation du fluide.

5. Soupape selon l'une des revendications 1 à 4, **caractérisée par** la présence, sur la pièce de glissement (5) et/ou sur le pourtour extérieur de la pièce (2) de canalisation du fluide, de deux garnitures annulaires d'étanchement (9, 10 ; 11, 12) ou garnitures d'étanchement à anneaux glissants, distantes l'une de l'autre, entre lesquelles est prévue au moins une rainure annulaire (13, 14) réalisée sous la forme d'un compartiment à graisse.

6. Soupape selon la revendication 4 ou 5, **caractérisée par le fait qu'**au moins une garniture annulaire d'étanchement, ou garniture d'étanchement (9 ; 11) à anneau glissant, est configurée en une garniture d'étanchement à lèvre.

7. Soupape selon la revendication 6, **caractérisée par le fait que** la garniture d'étanchement à lèvre, à présence minimale, est retenue dans une rainure annulaire prévue sur le pourtour du corps obturateur et est en applique de manière étanche, par la région marginale libre du pourtour d'au moins une lèvre d'étanchement, contre le pourtour intérieur du carter (1) de ladite soupape.

8. Soupape selon l'une des revendications 1 à 7, **caractérisée par le fait que** le corps obturateur (4) peut être mû à sa position d'ouverture et/ou à sa position de fermeture, à partir d'une position de départ, en opposition à une force de rappel.

9. Soupape selon la revendication 8, **caractérisée par le fait qu'**au moins un élément doué de l'élasticité du caoutchouc, ou doué de l'élasticité d'un ressort, développe la force de rappel.

10. Soupape selon l'une des revendications 1 à 9, **caractérisée par le fait que** le carter (1) de ladite soupape est réalisé sous la forme d'un carter à recharges ou à cartouches.

11. Soupape selon l'une des revendications 1 à 10, **caractérisée par le fait que**, dans la région partielle du guide de coulissement située côté afflux, le carter (1) de ladite soupape est de réalisation ouverte en direction de l'espace environnant.

12. Soupape selon l'une des revendications 1 à 11, **caractérisée par le fait que** ladite soupape est réalisée sous la forme d'un limiteur de pression.

13. Soupape selon l'une des revendications 1 à 12, **caractérisée par le fait qu'**un régulateur de jets de type aéré, placé en aval de ladite soupape dans la direction de l'écoulement, est de préférence implanté dans la sortie d'eau d'une robinetterie sanitaire de décharge.
